# EUROPÄISCHE PATENTANMELDUNG

(11) **EP 4 032 398 A1**
(43) Veröffentlichungstag der Anmeldung: **27.07.2022**
(21) Anmeldenummer: 22151325.2
(22) Anmeldetag: 13.01.2022
(51) Int. Cl.: A01K 13/00, A46B 13/02, A46B 13/00, A46B 17/06, A46B 9/02

(54) **HAARBÜRSTE**

(30) Priorität: 22.01.2021 DE 102021101420
(71) Anmelder: Bernard, Willi, 61250 Usingen (DE); Follert, Ottfried, 61250 Usingen (DE)
(72) Erfinder: Bernard, Willi, 61250 Usingen (DE); Follert, Ottfried, 61250 Usingen (DE)
(74) Vertreter: Boult Wade Tennant LLP

(57) **Zusammenfassung**

Haarbürste (1), aufweisend eine Bürste (10) mit Borsten (12), wobei die Bürste (10) teilweise von einem Gehäuse (30) mit einer Öffnung (34) umgeben ist, sodass ein Teil der Borsten (12) freiliegend ist und wobei die Bürste (10) in dem Gehäuse (30) rotierend gelagert ist und mit einem Antrieb versehen ist, wobei das Gehäuse (30) eine Sammeleinrichtung (40) aufweist, die Rückstände aus der Bürste (10) entfernt und das Gehäuse (30) ein Sammelbehälter (32) zum Zurückhalten der durch die Sammeleinrichtung (40) entfernten Rückstände ist.

## Beschreibung

Die Erfindung betrifft eine Haarbürste, die insbesondere zum Reinigen von Tierfell geeignet ist.

Haarbürsten oder Tierfellbürsten werden benutzt um das Oberfell und das Unterfell von Tieren von Verschmutzungen zu reinigen. Zu Zeiten des Fellwechsels werden Bürsten auch zum gezielten Entfernen von abgelegten Haaren bzw. Fell benutzt. Insbesondere bei starken Verschmutzungen des Fells beim Fellwechsel setzen sich die Borsten Haarbürsten oder Tierfellbürsten schnell mit Rückständen (Schmutz / abgeworfene Haare) zu, sodass die Bürsten oft schon nach wenigen Zügen über das Fell zugesetzt sind und für eine weitere Benutzung gereinigt werden müssen. Hierfür werden die Haare manuell von den Borsten gelöst und entsorgt.

Dies ist einerseits aufwendig und wird von manchen Benutzern als störend oder nicht hygienisch empfunden. Daher stellt sich der Erfindung die zugrundeliegende Aufgabe, eine Haarbürste bereitzustellen, deren Reinigung von Rückständen leichter erfolgen kann.

Diese Aufgabe wird durch die erfindungsgemäße Lösung nach dem Anspruch 1 gelöst. Vorteilhafte Ausgestaltungen ergeben sich aus den abhängigen Ansprüchen 2 bis 15.

Erfindungsgemäß wird eine Haarbürste, aufweisend eine Bürste mit Borsten vorgeschlagen, wobei die Bürste teilweise von einem Gehäuse mit einer Öffnung umgeben ist, sodass ein Teil der Borsten freiliegend ist und wobei die Bürste in dem Gehäuse rotierend gelagert ist und mit einem Antrieb versehen ist, wobei das Gehäuse eine Sammeleinrichtung aufweist, die Rückstände aus der Bürste entfernt und das Gehäuse ein Sammelbehälter zum Zurückhalten der durch die Sammeleinrichtung entfernten Rückstände ist.

So ergibt sich der Vorteil, dass die Rückstände vorteilhaft stetig von den Borsten entfernt werden, sodass stets eine gute Reinigungsleistung durch freie Borsten gegeben ist. Außerdem gestaltet es sich weiterhin vorteilhaft, dass die Rückstände nicht manuell von den Borsten entfernt werden müssen, sondern dass dies durch die Sammeleinrichtung geschieht. Durch das Zurückhalten der entfernten Rückstände in dem Sammelbehälter verlängern sich die Zyklen, innerhalb derer die Rückstände aus der Haarbürste entfernt werden müssen. Weiterhin gestaltet es sich im Gegensatz zu manuellen Bürsten durch die angetriebene Rotation der Bürste vorteilhaft, dass pro Zug mit der Haarbürste eine größere Anzahl von Borsten mit der zu reinigenden Oberfläche in Kontakt kommt und somit die Reinigungsleistung verbessert wird.

Nach einer Ausgestaltung der Erfindung ist vorgesehen, dass die Bürste in dem Gehäuse austauschbar ist. So kann die Bürste auf die zu reinigende Oberfläche angepasst sein. Beispielsweise können Bürsten mit einem Borstenbesatz vorgesehen sein, der aus Stiften besteht. Diese Stifte können unterschiedliche Materialien, wie beispielsweise Kunststoff, Metall oder Holz aufweisen. Ebenfalls können die Borsten durch Fasermaterialien dargestellt sein. Als Fasermaterial kommen Naturfasern, Naturhaar oder Kunststofffasern in Betracht. Die Fasern können einzeln die Borsten darstellen oder eine Borste kann aus einem Bündel von Fasermaterialien dargestellt sein. Ferner ist eine Kombination aus Faserborsten und Stiften denkbar. Es versteht sich von selbst, dass die Borsten keine einheitliche Länge aufweisen müssen, sondern eine Kombination aus unterschiedlichen Borstenlängen sein können. Außerdem können die obig beschriebenen unterschiedlichen Borstentypen aus Stiften oder Fasermaterialien so kombiniert werden, dass sie unterschiedliche Längen aufweisen. Durch die Auswahl einer Bürste mit einem Borstentyp, einer Borstenlänge und eines Borstenmaterials oder einer Kombination aus unterschiedlichen Borstentypen, Borstenmaterialien und/oder Borstenlängen ergibt sich der Vorteil, dass die Haarbürste mit der austauschbaren Bürste auf den gegebenen Einsatzzweck anpassbar ist. So kann beispielsweise durch eine geeignete Auswahl verstärkt das Oberhaar oder das Unterhaar eines Felles gereinigt werden.

Nach einer Weiterbildung der Erfindung ist vorgesehen, dass die Sammeleinrichtung ein Kamm ist, dessen Zinken mit den Borsten der Bürste in Eingriff stehen oder dessen Zinken mit den Borsten der Bürste in Eingriff zu bringen sind. Dadurch können Rückstände in vorteilhafter Weise dauerhaft von den Borsten entfernt werden oder in der Variante, in der die Zinken mit den Borsten der Bürste in Eingriff zu bringen sind, können die Borsten selektiv von Rückständen befreit werden. Insbesondere die mechanische Entfernung der Rückstände mittels eines Kamms gestaltet sich vorteilhaft, da sich Rückstände dadurch besonders effektiv von den Borsten trennen lassen. Der Kamm kann aus unterschiedlichen Materialien, wie beispielsweise Kunststoff, Gummi oder Metall hergestellt sein. Der Kamm kann eine Flexibilität aufweisen, wobei die Zinken mit den Borsten in einer Passung sind, wenn diese in einer Rotationsstellung in Überdeckung gebracht sind. Dadurch können die Zinken des Kamms in Umlaufrichtung mitgeschleppt werden und so die Rückstände von den Borsten abstreifen. Ebenfalls ist es denkbar, dass die Zinken entgegen der Umlaufrichtung der Borsten in einem Winkel gegen die Borsten angestellt sind. In einer weiteren Ausführungsform ist vorgesehen, dass die Zinken des Kamms durch Büschel aus Fasern gebildet sind. Auf diese Weise wird insbesondere bei einer Bürste mit Borsten aus Fasern eine optimale Reinigungswirkung der Borsten erzielt. Nach einer weiteren optionalen Ausgestaltung ist vorgesehen, dass die Sammeleinrichtung ein Kamm ist, der eine einzige Abstreiflippe, etwa eine Gummilippe aufweist.

Nach einer weiteren Ausgestaltung der Erfindung ist vorgesehen, dass der Kamm normal zu der Umlaufrichtung der Bürste angeordnet ist. Auf diese Weise wird vorteilhaft erreicht, dass der Kamm alle Borsten während eines Umlaufs der rotierenden Bürste erreicht.

Die obig beschriebenen Vorteile, die sich aus der Austauschbarkeit der Bürste ergeben, gelten verständlicherweise auch für den Kamm. Daher ist in einer Weiterbildung der Erfindung vorgesehen, dass der Kamm austauschbar ist. Hier können die Materialien und Geometrien, wie oben für den Kamm beschrieben, vorteilhaft passend zu der jeweiligen Ausgestaltung der Bürste und passend zu dem jeweiligen Einsatzzweck ausgewählt werden.

Nach einer Weiterbildung der Erfindung ist vorgesehen, dass die Borsten der Bürste in Umlaufrichtung hintereinander und parallel zu dem Kamm voneinander beabstandet angeordnet sind und, dass die Zinken des Kamms in den Zwischenräumen zwischen den Borsten eingreifen. Nach einer konkreten Ausgestaltung kann vorgesehen sein, dass die Borsten eine Breite von 1 mm oder weniger aufweisen und die Abstände der Zinken des Kamms 1,5 bis 2,5 mm bei einer Zinkenbreite von 1 bis 1,5 mm betragen.

Nach einer optionalen Weiterbildung kann vorgesehen sein, dass die Sammeleinrichtung statisch aufgeladen ist. Die Sammeleinrichtung kann einen Kamm umfassen, wobei dies für die Erfindung nicht notwendigerweise vorgesehen sein muss. Die Sammeleinrichtung kann ebenso durch ein statisch aufgeladenes Gehäuse oder durch eine statisch aufgeladene Innenseite des Gehäuses oder durch ein statisch aufgeladenes Element innerhalb des Gehäuses vorgesehen sein. Die statisch aufgeladene Sammeleinrichtung kann ebenfalls in Kombination mit dem Kamm vorgesehen sein oder der Kamm selbst kann die statisch aufgeladene Sammeleinrichtung bilden. Insbesondere bei einem Einsatz zur Reinigung von Fellen ist die statische Aufladung vorteilhaft, da sich die entfernten Haare als Rückstände durch statische Aufladung der Sammeleinrichtung besonders gut von den Borsten der Bürste trennen lassen.

Nach einer weiteren Ausgestaltung der Erfindung ist vorgesehen, dass die Bürste eine Walzenbürste ist. Eine Walzenbürste weist einen zylinderförmigen Grundkörper auf, auf dessen Umfang regelmäßig oder unregelmäßig Borsten angeordnet sind. Der Grundkörper weist in einer Ausgestaltung eine Aufnahme für eine Welle auf, durch die die Walzenbürste mittels des Antriebs in eine Rotation um ihre Längsachse versetzt werden kann. Durch eine Walzenbürste lassen sich relativ leicht breite Streifen reinigen. In einer Ausgestaltung der Erfindung kann vorgesehen sein, dass die Walzenbürste entlang deren Längsachse bzw. Rotationsachse eine Ausdehnung von 100 bis 120 mm hat.

Nach einer alternativen Ausgestaltung ist vorgesehen, dass die Bürste eine Rundbürste ist. Eine Rundbürste weist einen scheibenförmigen Grundkörper auf, wobei die Borsten auf einer Stirnfläche dieses Grundkörpers angeordnet sind. Die Rotationsachse verläuft durch das Zentrum des Grundkörpers, welcher ebenfalls im Zentrum eine Aufnahme für eine Welle aufweist. Die Rundbürste rotiert parallel zu der zu reinigenden Oberfläche und ist beispielsweise für anisotrope Ausrichtungen der Haare von Fellen gut geeignet.

Nach einer Weiterbildung der Erfindung ist vorgesehen, dass das Gehäuse einen entfernbaren Deckel aufweist. Durch den entfernbaren Deckel lassen sich die gesammelten Rückstände aus dem Sammelbehälter besonders komfortabel und leicht entfernen. Der Deckel kann in einer Ausgestaltung der Erfindung schraubbar oder clipbar sein.

Nach einer weiteren Ausgestaltung der Erfindung kann vorgesehen sein, dass der Handgriff stirnseitig an das Gehäuse anschließt. Auf diese Weise ergibt sich mit Vorteil, dass die Bürste leicht zu handhaben ist. Dementsprechend ist in einer weiteren Ausgestaltung der Erfindung vorgesehen, dass der Antrieb in dem Handgriff untergebracht ist und der Antrieb und die Bürste entlang der Rotationsachse angeordnet sind.

Weiterbildend kann vorgesehen sein, dass die Bürste durch einen Stirnradmotor angetrieben ist. Nach einer weiteren Ausgestaltung ist vorgesehen, dass eine Regelungseinrichtung für den Stirnradmotor in dem Handgriff untergebracht ist. Insbesondere durch einen Stirnradmotor lässt sich der Antrieb platzsparend in dem Handgriff unterbringen. Durch die Regelungseinrichtung, die einen Stellknopf oder eine Eingabemöglichkeit zur Regelung der Drehzahl der Bürste umfassen kann, lässt sich die Reinigungsintensität über die Drehzahl in vorteilhafter Weise an den jeweiligen Reinigungszweck und die zu reinigende Oberfläche anpassen.

Zweckmäßig kann vorgesehen sein, dass eine Energieversorgung für den Stirnradmotor in dem Handgriff angeordnet ist oder der Handgriff einen Anschluss für eine elektrische Leitung zur Versorgung des Stirnradmotors aufweist. Auf diese Weise ist die Haarbürste komfortabel einzusetzen, da auf eine externe Stromversorgung komplett verzichtet werden kann oder zumindest eine elektrische Leitung an einer wenig störenden Stelle an die Haarbürste angeschlossen werden kann. Im Falle eines Anschlusses einer elektrischen Leitung kann optional auf die Energieversorgung in dem Handgriff, etwa durch Akkumulatoren, verzichtet werden, was Gewicht einspart und insgesamt den Bedienungskomfort der Haarbürste positiv beeinflusst.

Nach einer Weiterbildung der Erfindung ist vorgesehen, dass das Gehäuse auf einer dem Handgriff gegenüberliegenden Seite einen Verschluss aufweist, der die Bürste in dem Gehäuse drehbar axial fixiert und über den die Bürste aus dem Gehäuse entnehmbar ist. Auf diese Weise gestaltet sich der Wechsel der Bürste vorteilhaft und komfortabel. Die Bürste ist in einer optionalen Ausgestaltung durch eine Steckmontage auf die Antriebswelle aufsteckbar und wird durch den Verschluss in axialer Richtung fixiert. Dies gestaltet sich vorteilhaft, da sich der Austausch leicht gestaltet und in einer optionalen Ausgestaltung der Erfindung werkzeuglos erfolgen kann. Schließlich kann in einer Ausführungsform vorgesehen sein, dass auf das Gehäuse eine Absaugeinrichtung zur Absaugung der in der dem Sammelbehälter zurückgehaltenen Rückstände aufsetzbar ist. Hierfür kann das Gehäuse eine Aussparung aufweisen, um eine Verbindung von dem Sammelbehälter zu der Absaugvorrichtung herzustellen. Ebenfalls kann die Öffnung verwendet werden, die durch den Deckel verschließbar ist. Die Absaugeinrichtung kann einen Anschluss für beispielsweise einen Staubsauger aufweisen. Die Rückstände können kontinuierlich oder intermittierend abgesaugt werden. Bei einer kontinuierlichen Absaugung kann der Sammelbehälter entsprechend klein dimensioniert werden. In diesem Fall kann der Sammelbehälter bzw. das Gehäuse derart konstruiert sein, dass ein optimaler Sog in dem Gehäuse bzw. Sammelbehälter um die Bürste hergestellt wird. Durch das Vorsehen einer Absaugeinrichtung wird die Handhabung der Haarbürste und deren Reinigung weiter vereinfacht.

Weitere Merkmale, Details und Vorteile der Erfindung ergeben sich aus dem Wortlaut der Ansprüche sowie aus der folgenden Beschreibung Ausführungsbeispielen basierend auf den Zeichnungen.

In den Figuren zeigen:
- Fig. 1:: eine schematische, perspektivische Ansicht der Haarbürste,
- Fig. 2A:: eine schematische, teilweise geschnittene Seitenansicht der Haarbürste,
- Fig. 2B:: eine schematische, teilweise geschnittene Stirnseitenansicht der Haarbürste entlang des Schnitts A-A aus Fig. 2A,

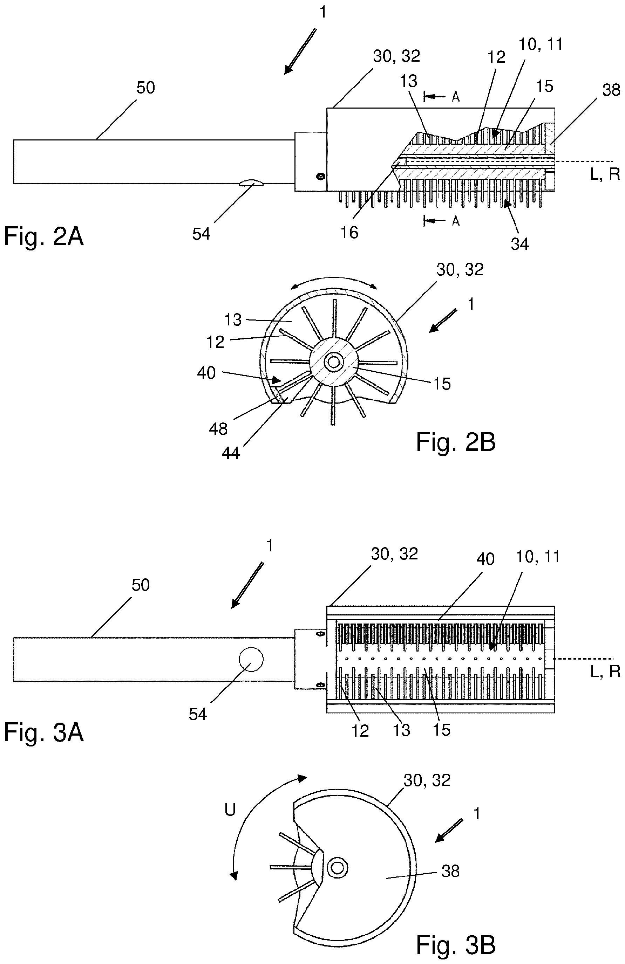

- Fig. 2A:: eine weitere schematische Seitenansicht der Haarbürste,
- Fig. 2B:: eine weitere schematische Stirnseitenansicht der Haarbürste,

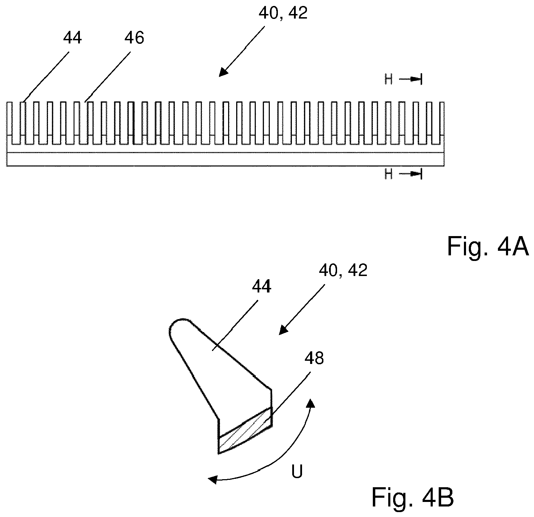

- Fig. 4A:: eine schematische Seitenansicht der Sammeleinrichtung,
- Fig. 4B:: eine schematische Stirnseitenansicht der Sammeleinrichtung entlang
- des: Schnitts H-H aus Fig. 4A und

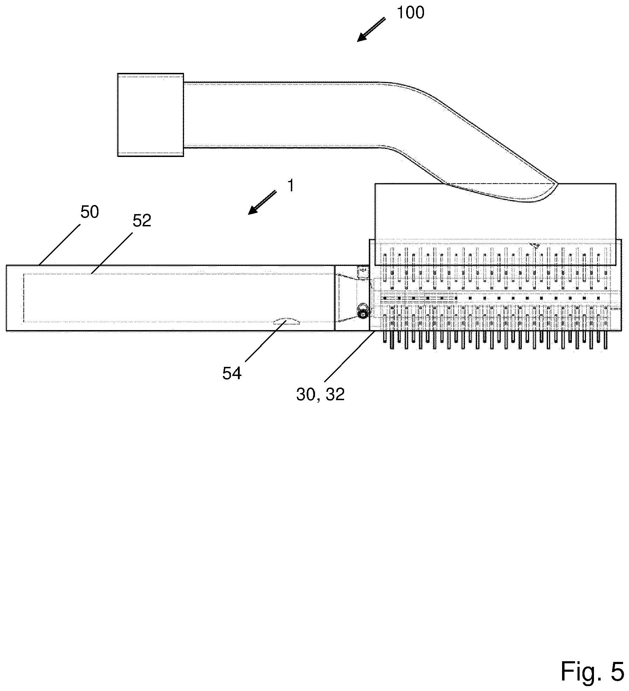

- Fig. 5:: eine schematische Seitenansicht der Haarbürste mit Absaugeinrichtung.

In der nachfolgenden Figurenbeschreibung werden für die in den jeweiligen Figuren dargestellten Elemente, die ähnlich sind, gleiche Bezugszeichen verwendet, ungeachtet dessen, ob es sich um ein und dieselbe Ausführungsform oder Variante handelt.

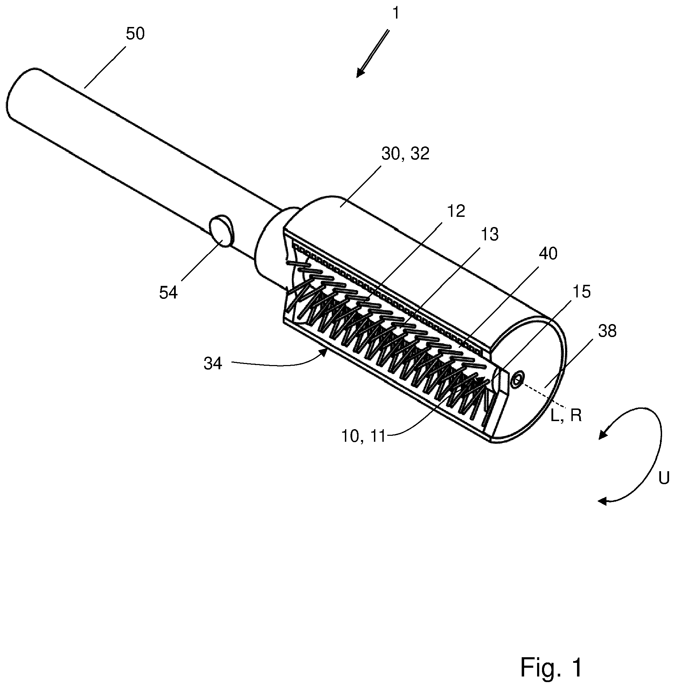

Figur 1 zeigt eine schematische, perspektivische Ansicht der Haarbürste 1. Die Haarbürste 1 weist ein Gehäuse 30 auf, in dem eine Bürste 10 drehbar gelagert ist. Das Gehäuse 30 ist in dieser Ausführungsform zylindrisch ausgebildet und weist eine Öffnung 34 auf Die Bürste 10 ist angetrieben und ist in Umlaufrichtung U drehbar. In dieser Ausführungsform ist die Bürste 10 als Walzenbürste 11 ausgebildet, welche einen Grundkörper 15 aufweist, auf dessen Umfang Borsten 12 angeordnet sind. Die Borsten 12 sind in dieser Ausführungsform als Stifte 14 ausgestaltet. Die Borsten 12 bzw. Stifte 14 sind voneinander über Zwischenräume 13 beabstandet. Der Übersichtlichkeit halber wurde jeweils nur eine Borste 12 bzw. ein Stift 14 und ein Zwischenraum 13 in der Figur 1 mit einem Bezugszeichen versehen. Es versteht sich, dass die Borsten 21 um den gesamten Umfang des Grundkörpers 15 der Bürste 10 bzw. Walzenbürste 11 regelmäßig angeordnet sind.

Die Bürste 10 bzw. Walzenbürste 11 ist in Umlaufrichtung U um die Rotationsachse R drehbar. Die Rotationsachse R ist mit der Längsachse L der Haarbürste 1 in dieser Ausführungsform deckungsgleich.

Das Gehäuse 30 weist an einer Stirnseite einen Verschluss 38 auf, der die Bürste 10 bzw. Walzenbürste 11 drehbar in axialer Richtung, also entlang der Längsachse L oder Rotationsachse R fixiert. An der gegenüberliegenden Stirnseite des Gehäuses 30 ist ein Handgriff 50 angebracht. Die Öffnung 34 ist eine Aussparung eines Teils des Mantels des zylindrischen Gehäuses 30. Auf der Stirnseite ist ein Winkelbereich des kreisförmigen Querschnitts des Gehäuses 30 und auch des Verschlusses 38 und des nicht näher bezeichneten Anschlusses des Handgriffs 50 ausgespart. Der Winkelbereich beträgt in etwa 90° und die Aussparung in dem Verschluss 38 bzw. dem Anschluss ragt nicht bis zu deren jeweiligem Zentrum, sodass ein Bereich der des Verschlusses 38 bzw. Anschlusses für die Aufnahme der drehbaren Lagerung der Bürste 10 bzw. Walzenbürste 11 in jeder Stirnseite des zylinderförmigen Gehäuses 30 verbleibt (vgl. auch Fig. 2B).

Ferner ist in Figur 1 die Sammeleinrichtung 40 erkennbar, die an einer sich parallel zur Längsachse L erstreckenden Seite der Öffnung 34 angeordnet ist. Das Gehäuse 30 ist in dieser Ausführungsform ebenfalls der Sammelbehälter 30. Die Sammeleinrichtung 40, kann ebenso wie die Bürste 10, entsprechend der Reinigungsanforderungen ausgetauscht werden.

Der Handgriff 50 hat eine Eingabemöglichkeit 54, beispielsweise ein Druck- oder Wählschalter, womit eine Drehzahl und ein Schaltzustand des Antriebs gewählt werden können. Der Antrieb ist als Stirnradmotor 52 ausgebildet, welcher in dem Handgriff angeordnet ist (vgl. Fig. 5). Der Stirnradmotor 52 kann durch eine nicht näher dargestellte Steuereinrichtung angesteuert werden. Die Steuereinrichtung kann ebenfalls in dem Handgriff untergebracht sein und kann eine Verbindung zu der Eingabemöglichkeit 54 aufweisen. Die von einem Benutzer über die Eingabemöglichkeit 54 vorgenommenen Eingaben werden von der Steuereinrichtung in Schaltbefehle für den Stirnradmotor 52 umgesetzt. Ferner können in dem Handgriff 50 ein nicht näher dargestellter Akkumulator und/oder ein nicht näher dargestellter elektrischer Anschluss zur Energieversorgung des Stirnradmotors 52 untergebracht sein.

Wenn die Haarbürste 1 mit der rotierend angetriebenen Bürste 10 über Haare, beispielsweise über ein Fell eines Tieres bewegt wird, dann greifen die Borsten 12 in das Fell des Tieres ein, wenn sie in einer Winkelstellung sind, die in dem Bereich der Öffnung 34 des Gehäuses 30 sind. Die Borsten 12 entfernen Verschmutzungen und abgeworfene Haare aus dem Fell des Tieres. Die Verschmutzungen und abgeworfenen Haare verbleiben als Rückstände in den Zwischenräumen 13 der Borsten 12 in der Bürste 10 bzw. Walzenbürste 11. Die Rotation der Bürste 10 bzw. Walzenbürste 11 befördert die Rückstände in Richtung der Sammeleinrichtung 40, wo die Borsten 12 die Abstände 46 zwischen den Zinken 44 der kammartigen Struktur der Sammeleinrichtung 40 durchlaufen (vgl. auch Fig. 4A). Hierbei werden die Rückstände abgestreift und verbleiben innerhalb des Gehäuses 30, welches als Sammelbehälter 32 dient. Es ist ebenfalls denkbar, dass die Borsten 12 der Bürste 10 durch eine geeignete Mechanik, etwa durch Verschieben der Sammeleinrichtung 40 gegen die Längsachse L der Haarbürste 1 in Eingriff oder außer Eingriff bringbar sind.

Figur 2 zeigt eine schematische, teilweise geschnittene Seitenansicht der Haarbürste 1 (Fig. 2A) und eine schematische, teilweise geschnittene Stirnseitenansicht der Haarbürste 1 entlang des Schnitts A-A aus Fig. 2A in Fig. 2B.

Der Grundkörper 15 der Bürste 10 bzw. Walzenbürste 11 weist eine Aufnahme für eine Antriebswelle 16 auf. Die Antriebswelle kann einen Mehrkant (beispielsweise einen Vierkant oder einen Sechskant) aufweisen und ist zumindest teilweise formschlüssig in den Grundkörper 15 von einer Stirnseite des Gehäuses 30 her eingesteckt. In dieser Ansicht sind wiederum die Borsten 12, bzw. Stifte 14 mit den Zwischenräumen 13 zu erkennen. Die Sammeleinrichtung 40 ist in dieser Ansicht nicht erkennbar. Es ist denkbar, dass das Gehäuse 30 selbst als Sammeleinrichtung 40 funktioniert, indem es statisch aufgeladen wird.

Figur 2B zeigt in einer Schnittansicht, wie eine Borste 12 in dem Abstand 46 zwischen den Zinken 44 der Sammeleinrichtung 40 durchgeführt ist. Die Sammeleinrichtung 40 ist hier als Kamm 42 ausgeführt (vgl. auch die Ausführungen zu Figur 4). Ansonsten wird für die Figuren 2 und 3 auf die Ausführungen zu Figur 1 Bezug genommen.

Figur 4 zeigt eine separate schematische Seitenansicht der Sammeleinrichtung 40 in Fig. 4A und eine schematische Stirnseitenansicht der Sammeleinrichtung 40 entlang des Schnitts H-H aus Fig. 4A in Fig. 4B.

Die Sammeleinrichtung 40 ist hier als Kamm 42 Zinken 44 ausgeführt, wobei die Zinken 44 entlang der Erstreckung des Kamms 42 Abstände 46 aufweisen. Der Kamm 42weist einen durchgehenden Steg 48 auf, der sich parallel zu der Längsachse L der Haarbürste 1 erstreckt (vgl. Fig. 1 und Fig. 3). Die Zinken 44 erstrecken sich, bezogen auf die Bürste 10 radial in dem Gehäuse 10 nach innen. Die Abstände 46 sind so gewählt, dass die Borsten 12 die Abstände 46 durchlaufen können ohne seitlich, also in Längsrichtung L der Bürste oder radial an der Sammeleinrichtung 40 anzustoßen. Es ist ebenfalls in einer Variante denkbar, dass die Abstände 46 so gewählt sind, dass die Borsten 12 mit den Abständen 46 in Kontakt kommen, sodass Rückstände direkt von den Borsten 12 durch die Zinken 44 abgenommen werden können.

Der Steg 58 des Kammes 42 ist auf der radial äußeren Seite, also der Seite die zu dem Gehäuse 30 zeigt, mit einem Radius ausgebildet, der dem Radius des Gehäuses 30 entspricht. Die Zinken 44 erstrecken sich radial nach innen zunächst im Wesentlichen normal zu dem Gehäuse um dann in Umlaufrichtung U einen Anstellwinkel anzunehmen. In dieser Ausführungsform sind die Zinken 44 im Querschnitt dreiecksförmig mit einer abgerundeten Spitze auf der dem Steg des Kammes 42 abgewandten Seite ausgebildet.

Fig. 5 zeigt eine schematische Seitenansicht der Haarbürste 1 mit Absaugeinrichtung 100. Die Absaugeinrichtung 100 ist auf das Gehäuse 30 aufgesetzt bzw. bildet einen Teil des Gehäuses 30. Eine Verbindung zwischen dem Gehäuse 30 und der Absaugeinrichtung 100 kann durch die Aussparung erfolgen, die in der Variante nach den Figuren 1 bis 4 durch einen nicht dargestellten Deckel verschlossen ist. Die Absaugeinrichtung 100 weist einen Anschluss für beispielsweise einen Staubsauger auf. Dadurch kann ein Unterdruck in dem Gehäuse 30 bzw. dem Sammelbehälter 32 erzeugt werden und die durch die Sammeleinrichtung 40 von der Bürste 10 entfernten Rückstände mittels eines Sogs aus der Haarbürste entfernt werden.

Die Erfindung ist nicht auf die oben angeführten Ausführungsformen beschränkt. Sie kann auf verschiedene Weisen modifiziert werden.

Sämtliche Merkmale und Vorteile, die sich aus den Ansprüchen, der Beschreibung und der Zeichnung ergeben, einschließlich konstruktiver Einzelheiten, räumlicher Anordnungen und Verfahrensschritten, können sowohl allein als auch in verschiedenen Kombinationen für die Erfindung wesentlich sein.

**Bezugszeichenliste**

| | | | |
|---|---|---|---|
| 1 | Haarbürste | 40 | Sammeleinrichtung |
| | | 42 | Kamm |
| 10 | Bürste | 44 | Zinken |
| 11 | Walzenbürste | 46 | Abstand |
| 12 | Borsten | | |
| 13 | Zwischenräume | 50 | Handgriff |
| 14 | Stifte | 51 | Antrieb |
| 15 | Grundkörper | 52 | Stirnradmotor |
| 16 | Antriebswelle | 54 | Eingabemöglichkeit |
| 30 | Gehäuse | 100 | Absaugeinrichtung |
| 32 | Sammelbehälter | | |
| 34 | Öffnung | R | Rotationsachse |
| 36 | Deckel | U | Umlaufrichtung |
| 38 | Verschluss | L | Längsachse |

## Patentansprüche

1. Haarbürste (1), aufweisend eine Bürste (10) mit Borsten (12), wobei die Bürste (10) teilweise von einem Gehäuse (30) mit einer Öffnung (34) umgeben ist, sodass ein Teil der Borsten (12) freiliegend ist und wobei die Bürste (10) in dem Gehäuse (30) rotierend gelagert ist und mit einem Antrieb (51) versehen ist, wobei
- das Gehäuse (30) eine Sammeleinrichtung (40) aufweist, die Rückstände aus der Bürste (10) entfernt und
- das Gehäuse (30) ein Sammelbehälter (32) zum Zurückhalten der durch die Sammeleinrichtung (40) entfernten Rückstände ist.

2. Haarbürste (1) nach einem der vorhergehenden Ansprüche, **dadurch gekennzeichnet, dass** die Bürste (10) in dem Gehäuse (30) austauschbar ist.

3. Haarbürste (1) nach einem der vorhergehenden Ansprüche, **dadurch gekennzeichnet, dass** die Sammeleinrichtung (40) ein Kamm (42) ist, dessen Zinken (44) mit den Borsten (12) der Bürste (10) in Eingriff stehen oder dessen Zinken (44) mit den Borsten (12) der Bürste (10) in Eingriff zu bringen sind.

4. Haarbürste (1) nach einem der vorhergehenden Ansprüche, **dadurch gekennzeichnet, dass** der Kamm (42) normal zu einer Umlaufrichtung (U) der Bürste (10) angeordnet ist.

5. Haarbürste (1) nach einem der Ansprüche 3 oder 4, **dadurch gekennzeichnet, dass** der Kamm (42) austauschbar ist.

6. Haarbürste (1) nach einem der Ansprüche 3 bis 5, **dadurch gekennzeichnet, dass** die Borsten (12) der Bürste (12) in Umlaufrichtung (U) hintereinander und parallel zu dem Kamm (42) voneinander beabstandet angeordnet sind und, dass die Zinken (43) des Kamms (42) in den Zwischenräumen (13) zwischen den Borsten (12) eingreifen.

7. Haarbürste (1) nach einem der vorhergehenden Ansprüche, **dadurch gekennzeichnet, dass** die Sammeleinrichtung (40) statisch aufgeladen ist.

8. Haarbürste (1) nach einem der vorhergehenden Ansprüche, **dadurch gekennzeichnet, dass** die Bürste eine Walzenbürste oder eine Rundbürste ist.

9. Haarbürste (1) nach einem der vorhergehenden Ansprüche, **dadurch gekennzeichnet, dass** das Gehäuse (30) einen entfernbaren Deckel aufweist.

10. Haarbürste (1) nach einem der vorhergehenden Ansprüche, **dadurch gekennzeichnet, dass** ein Handgriff (50) stirnseitig an das Gehäuse (30) anschließt.

11. Haarbürste (1) nach einem der vorhergehenden Ansprüche, **dadurch gekennzeichnet, dass** der Antrieb (51) in dem Handgriff (50) untergebracht ist und der Antrieb (51) und die Bürste (10) entlang der Rotationsachse (R) angeordnet sind.

12. Haarbürste (1) nach einem der vorhergehenden Ansprüche, **dadurch gekennzeichnet, dass** die Bürste (10) durch einen Stirnradmotor (52) angetrieben ist und eine Regelungseinrichtung für den Stirnradmotor (52) in dem Handgriff (50) untergebracht ist.

13. Haarbürste (1) nach Anspruch 12, **dadurch gekennzeichnet, dass** eine Energieversorgung für den Stirnradmotor (52) in dem Handgriff (50) angeordnet ist oder der Handgriff (50) einen Anschluss für eine elektrische Leitung zur Versorgung des Stirnradmotors (52) aufweist.

14. Haarbürste (1) nach einem der Ansprüche 9 bis 13, **dadurch gekennzeichnet, dass** das Gehäuse (30) auf einer dem Handgriff (50) gegenüberliegenden Seite einen Verschluss (38) aufweist, der die Bürste (10) in dem Gehäuse (30) drehbar axial fixiert und über den die Bürste (10) aus dem Gehäuse (30) entnehmbar ist.

15. Haarbürste (1) nach einem der vorhergehenden Ansprüche, **dadurch gekennzeichnet, dass** auf das Gehäuse (30) eine Absaugeinrichtung (100) zur Absaugung der in der dem Sammelbehälter (32) zurückgehaltenen Rückstände aufsetzbar ist.
